# EUROPEAN PATENT APPLICATION

(11) **EP 4 467 312 A1**
(43) Date of publication of application: **27.11.2024**
(21) Application number: 23175444.1
(22) Date of filing: 25.05.2023
(51) Int. Cl.: B29B 17/02, B29B 17/04, B29K 23/00, B29L 7/00, B29L 9/00

(54) **A MECHANICAL POLYOLEFIN RECYCLING PROCESS**

(71) Applicant: Borealis AG, 1020 Vienna (AT)
(72) Inventor: ALBUNIA, Alexandra Romina, 4021 Linz (AT); DENIFL, Peter, 4021 Linz (AT); DUSCHER, Bernadette, 4021 Linz (AT)
(74) Representative: Maiwald GmbH

(57) **Abstract**

The present invention relates to mechanical polyolefin recycling process, wherein flexible articles are sorted by at least the presence/absence or identity of an external foreign material layer, with each of the resultant fractions of the recycling stream washed using conditions optimised for said stream, as well as to a mechanical polyolefin recycling apparatus configured for carrying out the mechanical polyolefin recycling process.

The mechanical polyolefin recycling process, comprising, in the given order, the steps of

a) providing a precursor polyolefin recycling stream (A) that contains polyolefin-containing pieces, wherein the precursor polyolefin recycling stream (A) contains at least 70 wt.-% of polyolefin-containing films;

b) sorting the pieces of the precursor polyolefin recycling stream (A) in one or more sorting steps by means of one or more sorters to form two or more polyolefin recycling fractions (B), wherein the precursor polyolefin recycling stream (A) is at least sorted by the presence/absence or identity of an external foreign material layer, wherein the foreign material is any non-polyolefin material;

c) washing each of the two or more polyolefin recycling fractions (B) individually, wherein the washing conditions for each of the two or more polyolefin recycling fractions (B) may be the same or different, with the proviso that at least one of the washing conditions is different to at least one other washing condition in least one variable selected from the group consisting of washing temperature, washing duration, washing solution, thereby generating two or more washed polyolefin recycling fractions (C).

## Description

### Field of the Invention

The present invention relates to mechanical polyolefin recycling process, wherein flexible articles are sorted by at least the presence/absence or identity of an external foreign material layer, with each of the resultant fractions of the recycling stream washed using conditions optimised for said stream, as well as to a mechanical polyolefin recycling apparatus configured for carrying out the mechanical polyolefin recycling process.

### Background to the Invention

During the last decade, concern about plastics and the environmental sustainability of their use in current quantities has grown. This has led to new legislation on disposal, collection and recycling of polyolefins. There have additionally been efforts in a number of countries to increase the percentage of plastic materials being recycled instead of being sent to landfill.

In Europe, plastic waste accounts for approximately 27 million tons of waste a year; of this amount in 2016, 7.4 million tons were disposed of in landfill, 11.27 million tons were burnt (in order to produce energy) and around 8.5 million tons were recycled. Polypropylene based materials are a particular problem as these materials are extensively used in packaging. Taking into account the huge amount of waste collected compared to the amount of waste recycled back into the stream (amounting to only about 30 %), there is still a great potential for intelligent reuse of plastic waste streams and for mechanical recycling of plastic wastes.

Taking the automobile industry as an example. In Europe the end of life (ELV) directive from the EU states, that 85%/95% of materials from vehicles should be recyclable or recoverable. The present rate of recycling of automobile components is significantly below this target. On average vehicles consist of 9 wt.-% plastics, out of this 9 wt.-% only 3 wt.-% is currently recycled. Therefore, there is still a need to be met if targets for recycling plastics in the automobile industry are to be achieved. This invention particularly focuses on mechanically recycled waste streams as opposed to "energetic recycling" where polyolefins are burnt and used for energy. However, due to cost reasons, poor mechanical properties and inferior processing properties waste streams containing cross-linked polyolefins are often used for energy recovery (e.g. incineration in a district heating plant or for heat generation in the cement industry) and are less often recycled into new products.

One major trend in the field of polyolefins is the use of recycled materials that are derived from a wide variety of sources. Durable goods streams such as those derived from waste electrical equipment (WEE) or end-of-life vehicles (ELV) contain a wide variety of plastics. These materials can be processed to recover acrylonitrile-butadiene-styrene (ABS), high impact polystyrene (HIPS), polypropylene (PP) and polyethylene (PE) plastics. Separation can be carried out using density separation in water and then further separation based on fluorescence, near infrared absorption or Raman fluorescence. However, it is commonly quite difficult to obtain either pure recycled polypropylene or pure recycled polyethylene. Generally, recycled quantities of polypropylene on the market are mixtures of both polypropylene (PP) and polyethylene (PE); this is especially true for post-consumer waste streams. Commercial recyclates from post-consumer waste sources have been found generally to contain mixtures of PP and PE, the minor component reaching up to < 50 wt.-%.

The better the quality, i.e. the higher the purity, of the recycled polyolefin the more expensive the material is. Moreover, recycled polyolefin materials are often cross-contaminated with non-polyolefin materials, such as polyethylene terephthalate, polyamide, polystyrene or non-polymeric substances like wood, paper, glass or aluminium.

In addition, recycled polypropylene rich materials normally have properties that are much worse than those of the virgin materials are, unless the amount of recycled polyolefin added to the final compound is extremely low. For example, such materials often have poor performance in odour and taste, limited stiffness, limited impact strength and poor mechanical properties (such as e.g. brittleness) thus, they do not fulfil customer requirements.

In the field of mechanical recycling of polyolefins, a distinction is generally drawn between rigid articles and flexible articles, which are generally separated and processed separately, since different challenges are associated with each type. In this context, flexible articles will generally be films and/or bags. The recycling of rigid articles may be complicated by the presence of fillers and pigments; however, such fillers and pigments are not so common in flexible articles, with colouring of flexible articles often achieved through applying non-polyolefin layers, such as ink layers, either as external layers or as internal layers. Whilst the presence of fillers/pigments is not such a problem in the recycling of flexible articles, flexible articles are often multilayer structures, wherein some of the layers may be (for example) metal layers, ink layers, adhesive layers, non-polyolefin polymer layers, paper labels or any other non-polyolefin layer. In order that the highest purity of polyolefin can be obtained in the final recycled polyolefin, these foreign materials need to be removed.

In recent years, developments in the field of mechanical recycling of flexible articles has focused on developing washing conditions that remove as much foreign material as possible, whether this is as a result of washing/dissolving the foreign material from the surface of the articles (e.g. de-inking or demetallization) or as a result of various delamination processes. Typical washing solutions range from simple neutral aqueous washes to strongly acidic or strongly caustic washing solutions, sometimes combined with the use of detergents and/or emulsion systems. Many of these washing systems can achieve a very efficient removal of non-polyolefin materials; however, the more effective conditions are not without their drawbacks, often employing high temperatures, long treatment times and/or expensive washing conditions. Furthermore, steps that achieve demetallization typically proceed via the oxidation of the metal layer, often releasing hydrogen gas, which requires special equipment to be used in order to avoid safety issues. Application of these more effective conditions to the entire recycling stream of flexible articles may be effective, but is uneconomical.

Whilst high-purity recycled polymer grades may be obtained via such combined washing/foreign material removal processes, there is a constant need for a more flexible and more economical solution that maintains the high levels of purity demonstrated for said combined processes.

### Summary of the Invention

The present invention is based on the observation that the desired high levels of purity can be achieved via a mechanical recycling process that involves sorting a recycling stream containing flexible articles into two or more fractions and employing different washing conditions for the two or more fractions, wherein each washing conditions is tailored to the requirements for washing said fraction.

Thus, in a first aspect, the present invention is directed to a mechanical polyolefin recycling process, comprising, in the given order, the steps of:
a) providing a precursor polyolefin recycling stream (A) that contains polyolefin-containing pieces, wherein the precursor polyolefin recycling stream (A) contains at least 70 wt.-% of polyolefin-containing films;
b) sorting the pieces of the precursor polyolefin recycling stream (A) in one or more sorting steps by means of one or more sorters to form two or more polyolefin recycling fractions (B), wherein the precursor polyolefin recycling stream (A) is at least sorted by the presence/absence or identity of an external foreign material layer, wherein the foreign material is any non-polyolefin material;
c) washing each of the two or more polyolefin recycling fractions (B) individually, wherein the washing conditions for each of the two or more polyolefin recycling fractions (B) may be the same or different, with the proviso that at least one of the washing conditions is different to at least one other washing condition in least one variable selected from the group consisting of washing temperature, washing duration, and washing solution, thereby generating two or more washed polyolefin recycling fractions (C).

In a further aspect, the present invention is directed to a mechanical polyolefin recycling apparatus configured for carrying out the mechanical polyolefin recycling process according to any one of the preceding claims.

### Definitions

Post-consumer waste refers to objects having completed at least a first use cycle (or life cycle), i.e. having already served their first purpose; while industrial waste refers to manufacturing scrap, which does not normally reach a consumer.

Recycling streams may contain both articles for recycling and fragments of articles for recycling, for example flakes. In the context of the present invention, the content of the recycling streams will be referred to as pieces, irrespective of whether these pieces are whole articles, fragments thereof, or flakes thereof. In certain embodiments, the pieces may be flakes, whereas in other embodiments pieces may be larger objects that may be converted into flakes at a later stage.

In the context of the present invention, a mixed plastic recycling stream may be any stream suitable for recycling, wherein polyolefin is present and the stream does not only contain a single polyolefin product, as would be the case, for example, for certain post-industrial waste recycling streams wherein the production waste of a single polyolefin grade, or a single polyolefin-containing article may be the only piece present in the stream. Generally speaking, all polyolefin-containing post-consumer waste recycling streams will be mixed plastic recycling streams, as will many polyolefin-containing post-industrial waste recycling streams. A "polyolefin recycling stream" according to the present invention may be a mixed-plastic recycling stream or it may have already undergone a sorting process whereby it has been enriched in a particular type of polyolefin. Alternatively or additionally, the polyolefin recycling stream may have a high purity of one type of polyolefin due to optimized waste collection management, wherein only certain types of waste are collected into a given recycling stream.

The term "article form", as used herein, refers to the shape and form of articles present in a polyolefin recycling stream. Such articles may be present, inter alia, in the form of films, bags, and pouches, which may be considered as flexible articles, and, inter alia, in the form of moulded articles such as food containers, skin-care product containers, and plastic bottles, which may be considered as rigid articles. Commercial optical sorters, such as Tomra Autosort, RTT Steinert Unisort, and Redwave Pellenc, are able to separate so-called rigid articles from so-called flexible articles via their aerodynamic properties (i.e. a stream of gas is typically applied to the stream and those articles being rigid articles will fall with a different arc than flexible articles), converting streams containing such articles into so-called rigid streams and flex streams. The present invention relates to polyolefin recycling streams being flex streams, i.e. having at least 70 wt.-% of polyolefin-containing films, wherein the term "films" is used to refer to any item having the required dimensional properties (i.e. being very thin in one dimension and much larger in the other two dimensions, irrespective of whether the film is present as part of a bag or, pouch or film.

Furthermore, the skilled person would be aware that state of the art sorting processes, such as those involving automated sorters of the type discussed below, do not result in perfect sorting, meaning that any wording such as "wherein the stream contains only a single colour" or "wherein the stream contains only a single polyolefin type" are to be interpreted broadly, wherein the streams thus described contain substantially only the stated colour or polyolefin type, but are not 100% pure due to technical limitations of the sorting steps.

The person skilled in the art would be aware that pH values of greater than 14.0 and lower than 0.0 are theoretically possible; however, they would also be aware that the determination of such pH values is incredibly difficult using conventional pH probes. As such, in the context of this invention, aqueous solutions having an effective pH of greater than 14.0 are considered to have a pH of 14.0 and aqueous solutions having an effective pH of lower than 0.0 are considered to have a pH of 0.0.

In the context of the present invention, the term "rinse" is used to indicate the addition of a solvent, typically water, which is used to remove foreign material or remaining liquid from the surface of the polyolefin. This can be achieved in very short times, i.e. less than 5 minutes, often less than 1 minute, in contrast to "washing" steps that typically require a longer time, and agitation, to remove adherent foreign material from the surface of the polyolefin and potentially extract volatile organic compounds from the polyolefin.

In the context of the present invention, the flake surface area is defined as the surface area of one of the faces of a flaked polyolefin. This surface area is approximately half of the total surface area of the flake, which has two such faces in addition to a very small amount of surface area coming from the edges of the flake. Flakes according to the present invention will typically have a flake surface area in the range from 50 to 2500 mm², more preferably in the range from 100 to 1600 mm², most preferably in the range from 150 to 900 mm².

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of elements, this is also to be understood to disclose a group, which preferably consists only of these elements.

Where an indefinite or definite article is used when referring to a singular noun, e.g. "a", "an" or "the", this includes a plural of that noun unless something else is specifically stated.

### Detailed Description

The present invention is directed to a mechanical polyolefin recycling process, comprising, in the given order, the steps of:
a) providing a precursor polyolefin recycling stream (A) that contains polyolefin-containing pieces, wherein the precursor polyolefin recycling stream (A) contains at least 70 wt.-% of polyolefin-containing films;
b) sorting the pieces of the precursor polyolefin recycling stream (A) in one or more sorting steps by means of one or more sorters to form two or more polyolefin recycling fractions (B), wherein the precursor polyolefin recycling stream (A) is at least sorted by the presence/absence or identity of an external foreign material layer, wherein the foreign material is any non-polyolefin material;
c) washing each of the two or more polyolefin recycling fractions (B) individually, wherein the washing conditions for each of the two or more polyolefin recycling fractions (B) may be the same or different, with the proviso that at least one of the washing conditions is different to at least one other washing condition in least one variable selected from the group consisting of washing temperature, washing duration, and washing solution, thereby generating two or more washed polyolefin recycling fractions (C).

In the broadest sense, the precursor polyolefin recycling stream (A) may be any recycling stream that contains at least 70 wt.-% of polyolefin-containing films. That said, it is preferred that the precursor polyolefin recycling stream (A) originates from post-consumer waste, post-industrial waste, or a combination thereof. Most preferably, the precursor polyolefin recycling stream (A) originates from post-consumer waste.

The precursor polyolefin recycling stream (A) may be a mixed plastic recycling stream or it may have already been enriched in one type of polyolefin, either by the sorting of a mixed plastic recycling stream or via careful waste collection management.

The sorting of step b) occurs in one or more sorting steps. Each of the sorting steps is carried out by a sorter. The individual sorting steps may each be a binary sorting step, wherein the pieces are sorted according to a particular criterion, with each piece either meeting this criterion or failing to meet this criterion and being sorted accordingly. Alternatively, the individual sorting steps may be higher order sorting steps, wherein the sorters sort the pieces into three or more fractions. As would be understood by the skilled person, a higher order sorting step may be more complicated to automate, meaning that multiple binary sorting steps are combined in order to achieve a complicated sorting algorithm that may be straightforwardly automated.

At least one of the individual sorting steps of step b) involves sorting by the presence/absence or identity of an external foreign material layer, wherein the foreign material is any non-polyolefin material. Typical non-polyolefin materials include inks, metals, adhesives, non-polyolefin polymers, and paper labels, as well as various organic and inorganic coatings. Many adhesives, labels and coatings may be removed by a simple aqueous wash; however, metals and inks in particular may be more complicated to remove.

In the simplest sense, the sorting by the presence/absence or identity of an external foreign material layer may be carried out as a binary sorting step, wherein all pieces having an external foreign material layer are formed into a single fraction and all pieces not having an external foreign material layer form the other fraction. Alternatively, the sorting by the presence/absence or identity of an external foreign material layer may be a higher order sorting step, wherein the pieces not having an external foreign material layer form one fraction and the other fractions are formed from the pieces having an external foreign material layer that have been sorted according to the identity of the foreign material layer, for example, one fraction may contain an ink-based external layer and another fraction may contain a paper-based external layer. Other sorting patterns along this line, based on the identity of the foreign material, are also suitable for the present invention. When there are no pieces without an external foreign material layer, the sorting by the presence/absence or identity of an external foreign material layer may simply sort by the identity of the layer as described above without having to sort by the presence/absence of an external foreign material layer.

Generally speaking, different washing conditions would be employed for removing an external foreign material from a piece than for washing pieces that do not have any external foreign material.

Suitable conditions for the removal of metal layers during polyolefin recycling have been disclosed in WO 2023/012156 A1 and EP 22 186 970.4, with such conditions including the use of an alkaline aqueous solution and various emulsions.

Suitable conditions for the removal of inks during polyolefin recycling have been disclosed in WO 2021/018605 A1 and WO 2021/104797 A1. In these documents, either acid washes (preferably conc. H₂SO₄) or acid/oil emulsions (preferably conc. H₂SO₄/cyclohexane) are used to good effect. The conditions in these documents are also suitable for the removal of other foreign materials, such as metal layers, adhesives, paper labels etc.

Consequently, step c) involves washing each of the two or more polyolefin recycling fractions (B) individually, wherein the washing conditions for each of the two or more polyolefin recycling fractions (B) may be the same or different, with the proviso that at least one of the washing conditions is different to at least one other washing condition in least one variable selected from the group consisting of washing temperature, washing duration, and washing solution, thereby generating two or more washed polyolefin recycling fractions (C).

In the broadest sense, the washing conditions used may be any suitable washing conditions known in the art, for example acidic washes, neutral aqueous washes, aqueous alkaline washes, emulsions, and combinations thereof, so long as at least one of the washing conditions differs from at least one other washing conditions in at least one variable selected from the group consisting of washing temperature, washing duration, and washing solution. The washing solution may differ in terms of the type of washing solution, e.g. one is basic, another is acidic, though the difference may be less extreme, with a 1.0 M NaOH wash solution considered to be different to, for example, a 0.1 M NaOH wash solution for the purposes of the present invention.

It is preferred that each washing condition has been optimized for the particular needs of the fraction in question, with some fractions (such as transparent pieces) only requiring relatively mild conditions and other fractions (such as those containing multilayer laminates) requiring considerably more forceful conditions (in terms of washing temperature, washing duration and/or washing solution).

It is particularly preferred that each of the washing conditions for the two or more polyolefin recycling fractions (B) differs from each of the other washing conditions in at least one variable, selected from the group consisting of washing temperature, washing duration, washing solution. In this particularly preferred embodiment, each washing condition may share some characteristics with the other washing conditions, so long as at least one variable is different.

If the optimized conditions for multiple polyolefin recycling fractions (B) would in fact be the same, then these polyolefin recycling fractions may be combined prior to washing, in order to reduce the number of washing steps required.

Each individual washing step may also include steps wherein the washing solution is removed from the washed pieces, such as by rinsing, as well as steps wherein any foreign material that has been removed from the polyolefin pieces (but not dissolved in the washing solution) is also removed. Suitable methods for the separation of polyolefins from the removed foreign material include a float/sink sort, wherein foreign materials are removed based on their densities. Additionally or alternatively, the polyolefin pieces may be sorted from small pieces of foreign material by sieving/filtering the suspension.

Removed washing solution that contains foreign material residues may be treated, for example filtered, to remove these residues before the washing solution is used again for another washing step.

It is preferred that the sorting by the presence/absence or identity of an external foreign material layer is carried out by an optical sorter. Suitable optical sorters include, but are not limited to, infrared-attenuated total reflectance (IR-ATR) spectroscopic analysis and camera systems (operating in the visible range of the EM spectrum). The former method is a specialized method wherein the surface properties of the piece are determined (typically the data obtained by such a method describes the outermost 2 µm of a polymer piece, hence the surface properties). The latter method can achieve the sorting by any form of recognition algorithm, wherein the optical sensor(s) are programmed to assess which pieces should be selected or rejected based on simple binary considerations. Alternatively, more complex AI-based systems can be used to achieve a more precise sorting, in particular when a certain brand of packaging is recognised and the composition of said packaging is known.

Alternatively, the sorting by the presence/absence or identity of an external foreign material layer may be carried out without the use of an optical sorter, for example by sorting by hand following a visual inspection. This particular sorting method is more able to identify an external metal layer than would be the case for techniques such as infrared-attenuated total reflectance (IR-ATR) spectroscopic analysis. Sorting by hand following a visual inspection operates on the same principles as the use of camera systems in combination with either simple recognition algorithms or more complex AI-based systems, with the latter expected to predominate, as AI recognition improves yet further.

Since sorting via infrared-attenuated total reflectance (IR-ATR) spectroscopic analysis is better able to distinguish organic materials, it is particularly preferred that the precursor polyolefin recycling stream (A) is at least sorted by the presence/absence or identity of an external foreign material layer, wherein the foreign material is any organic non-polyolefin material

As stated above, the overall sorting of step b) must include at least one step wherein the precursor polyolefin recycling stream (A) is at least sorted by the presence/absence or identity of an external foreign material layer. It is, however, preferred that other individual sorting steps are also carried out as part of the overall sorting of step b).

Consequently, it is preferred that, in step b), the pieces of the precursor polyolefin recycling stream (A) are additionally sorted by the presence/absence of metal.

Suitable methods for detecting the presence of a metal include, but are not limited to eddy current analysis, induction analysis, X-ray fluorescence (XRF) spectroscopic analysis, and near-IR spectroscopic analysis.

Pieces containing metal will generally require different washing conditions to pieces that do not contain metal, with the metal typically being oxidized under such conditions, often accompanied by the release of hydrogen (depending on what oxidant is employed). If hydrogen is generated, then more specialized equipment may be required to ensure safety if the recycling process is carried out on an industrial scale. By separating fractions containing metal from those that do not contain metal, the specialized equipment can be used more efficiently for metal-containing fractions, whilst fractions that do not require metal may undergo a simpler washing procedure using standard equipment, thus avoiding unnecessary operating costs involved with treating all fractions with the specialized equipment.

It is furthermore preferred that, in step b), the pieces of the precursor polyolefin recycling stream (A) are additionally sorted by colour. Preferably, the sorting by colour separates transparent pieces from non-transparent pieces.

Transparent pieces may be assumed to be free from foreign materials such as metals, inks, labels and coatings, since the presence of such foreign material would prevent the piece from being transparent. Generally speaking, the non-transparent pieces would be expected to contain at least one foreign material, which would usually be in the form of a separate layer (either external or internal); however the observed colour may be the result of various fillers present in the polyolefin, such as TiOz (white colour) or carbon black (black colour). It is preferred that polyolefin containing such fillers is removed from the recycling stream altogether, helping to obtain final washed polymer recycling fractions (C) that only contain transparent pieces; however, this is not necessarily that straightforward.

Suitable methods for sorting by colour include, but are not limited to camera systems (operating in the visible range of the EM-spectrum), visible reflectance spectroscopy, near-IR spectroscopic analysis, mid-IR spectroscopic analysis, and high-speed laser spectroscopic analysis.

It is also preferred that, in step b), the pieces of the precursor polyolefin recycling stream (A) are additionally sorted by polyolefin type.

In the simplest sense, pieces predominantly containing one polyolefin (e.g. polypropylene) may be separated from pieces that do not predominantly contain this polyolefin, with both resulting fractions going on through further sorting and/or washing steps. It is however, preferred that the pieces are sorted from the presence of one or more desired polyolefin, e.g. polypropylene and polyethylene, resulting in the generation of a fraction formed from pieces that predominantly contain polypropylene, a fraction formed from pieces that predominantly contain polyethylene, one or more fractions formed from pieces that predominantly contain any other desired polyolefin and a fraction formed from pieces that do not predominantly contain any one of the desired polyolefins in question. The final fraction, which contains only pieces that are of low purity or predominantly contain other polymers than the desired polyolefins, may be discarded from the present mechanical recycling process without going through subsequent sorting and/or washing steps. This discarded fraction may subsequently be used for energetic recycling (i.e. burnt as an energy source) or may alternatively be fed into different mechanical recycling processes, solvent-based recycling processes, or chemical recycling processes, as appropriate. The requirement that the two or more polyolefin recycling fractions (B) are washed in step c) does not apply to this final fraction, since it would not be considered to be a polyolefin recycling fraction, rather being a non-polyolefin recycling fraction.

The term predominantly would be understood by the person skilled in the art to indicate that the pieces to be sorted need not be 100% of the desired polyolefin, but the amount of polyolefin present in a particular piece may be selected according to the purity needs of the products of the mechanical recycling process. If especially high purity products are required, then the sorting would be more strict with regard to the amount of desired polyolefin present, whilst if it is more important to maximize the yield at the expense of a minor drop in purity, then this could also be achieved.

Preferably the term "predominantly contains" means at least 80 wt.-%, more preferably at least 90 wt.-%, even more preferably at least 95 wt.-%, most preferably "predominantly contains" means "consists essentially of".

Suitable methods for sorting by polyolefin type include, but are not limited to, near-IR spectroscopic analysis, mid-IR spectroscopic analysis, high-speed laser spectroscopic analysis, Raman spectroscopic analysis, and Fourier-transform infrared (FT-IR) spectroscopic analysis.

Whilst a sort by polymer type is preferred for cases wherein the precursor polyolefin recycling stream is a mixed plastic recycling stream, there are a number of recycling streams that are already sorted for polymer type, either as a result of a sorting step further up the production line (either within the same plant or possibly sorted for polymer type by one party and sold to another party who is to carry out the mechanical recycling of the present application), or as a result of careful sorting during waste collection (in some countries, consumers are required to separate their recycling waste prior to collection or the collection points may only accept certain polyolefins). As such, if the precursor polyolefin recycling stream (A) already predominantly contains only pieces containing predominantly one type of polyolefin, then a sort by polymer type would not be required.

As such it is particularly preferred that, in step b), the pieces of the precursor polyolefin recycling stream (A) are additionally sorted by polyolefin type, unless the precursor polyolefin recycling stream (A) predominantly contains only pieces containing predominantly one type of polyolefin. This sorting by polyolefin type, if present, is preferably the first individual sorting step of step b).

If a sort by polymer type is present, then it is preferred that this sort is carried out before the sort by the presence/absence or identity of an external foreign material layer. More preferably, the sort by polymer type is the first sorting step after any shredding step, should a shredding step be present (see below).

In embodiments where a sort for polymer type is carried out or embodiments in which such a sort is not necessary, it is preferred that the two or more polyolefin recycling fractions (B) have a high purity. As such, it is preferred that each of the two or more polyolefin recycling fractions (B) contains at least 70 wt.-%, more preferably at least 80 wt.-%, yet more preferably at least 90 wt.-% of a single polyolefin type. Preferably, this single polyolefin type is either polyethylene or polypropylene. The two of more polyolefin recycling fractions (B) of the present embodiment need not contain high amounts of the same polyolefin type as each other, so long as each fraction contains high amounts of one polyolefin type. As such, in one preferred embodiment some of the two or more polyolefin recycling fractions (B) contain at least 70 wt.-%, more preferably at least 80 wt.-%, yet more preferably at least 90 wt.-% of polypropylene, whilst the remaining polyolefin recycling fractions contain at least 70 wt.-%, more preferably at least 80 wt.-%, yet more preferably at least 90 wt.-% of a polyethylene.

Whilst pieces that are of low purity or predominantly contain other polymers than the desired polyolefin(s) (for example polyester (e.g. PET), polyamide, or polystyrene-based pieces) may be removed from the polyolefin recycling stream (A) as part of the sorting by polymer type and discarded from the present mechanical recycling process without going through subsequent sorting and/or washing steps, as described above, the removal of such pieces may also be carried out as a separate step. It is particularly preferred that pieces that predominantly contain non-polyolefin polymers are separated as early as possible in the sorting of step b). In embodiments wherein a shredding step is present (see below), it is preferred that the first sorting step after the shredding step is a step that removes pieces that predominantly contain non-polyolefin polymers, wherein this step may either be part of a sorting by polyolefin type (as described above) or, more preferably, a separate step. This step may also be carried out before any shredding step, preferably as the first sorting step of step b).

By removing any pieces that predominantly contain non-polyolefin polymers, which are to be discarded in any case, it is avoided that such pieces undergo unnecessary sorting steps, since the unnecessary sorting of pieces that are not to be washed and mechanically recycled would be inefficient, wasting time, energy and potentially washing solution.

In the broadest sense, so long as step b) includes at least one step wherein the precursor polyolefin recycling stream (A) is at least sorted by the presence/absence or identity of an external foreign material layer, then the requirements of the present invention would be fulfilled. That said, it is preferred that the further individual sorting steps disclosed above are also carried out during step b). The order in which the steps are carried out is not limited; however, certain combinations of steps are particularly preferred.

In one embodiment, it is preferred that the precursor polyolefin recycling stream (A) is at least sorted by the presence/absence or identity of an external foreign material layer, by the presence of metal, and between transparent and non-transparent pieces. It is particularly preferred that the order of steps is bi) sorting between transparent and non-transparent pieces, b-ii) sorting the non-transparent pieces between non-transparent pieces having an external foreign material layer and non-transparent pieces having no external foreign material layer, and b-iii) sorting the non-transparent pieces having an external foreign material layer between non-transparent pieces having an external foreign material layer, said pieces containing metal and non-transparent pieces having an external foreign material layer, said pieces not containing metal.

It is further preferred that the pieces of the precursor polyolefin recycling stream (A) are additionally sorted by polyolefin type before step b-i), unless the precursor polyolefin recycling stream (A) predominantly contains only pieces containing predominantly one type of polyolefin

The result of such a combination of steps would be a fraction (B 1) of transparent pieces, a fraction (B2) of non-transparent pieces having an external foreign material layer, said pieces containing metal, a fraction (B3) of non-transparent pieces having an external foreign material layer said pieces not containing metal, a fraction (B4) of non-transparent pieces having no external foreign material layer.

Although this combination of fractions would be obtainable by the given order of steps, the skilled person would be aware that this same combination of fractions could be obtained by other steps, such as a first sort for the presence/absence or identity of an external foreign material layer, with the pieces having an external foreign layer being sorted by the presence/absence of a metal and the pieces having no external foreign layer then being sorted between transparent and non-transparent fractions. This order would be expected to give similar properties to the order of sorting steps mentioned above, since pieces having an external foreign layer material would generally be expected to be non-transparent, given that the presence external foreign layers such as metal and inks would prevent the pieces from being transparent.

It is further preferred that the non-transparent pieces having no external foreign material layer are also sorted between pieces having metal and those not having metal.

In this embodiment, the precursor polyolefin recycling stream (A) is at least sorted by the presence/absence or identity of an external foreign material layer, by the presence of metal, and between transparent and non-transparent pieces. It is particularly preferred that the order of steps is bi) sorting between transparent and non-transparent pieces, b-ii) sorting the non-transparent pieces between non-transparent pieces having an external foreign material layer and non-transparent pieces having no external foreign material layer, b-iii) sorting the non-transparent pieces having an external foreign material layer between non-transparent pieces having an external foreign material layer, said pieces containing metal and non-transparent pieces having an external foreign material layer, said pieces not containing metal, and b-iv) sorting the non-transparent pieces having no external foreign material layer between non-transparent pieces having no external foreign material layer, said pieces containing metal and non-transparent pieces having no external foreign material layer, said pieces not containing metal.

It is further preferred that the pieces of the precursor polyolefin recycling stream (A) are additionally sorted by polyolefin type before step b-i), unless the precursor polyolefin recycling stream (A) predominantly contains only pieces containing predominantly one type of polyolefin

The result of such a combination of steps would be a fraction (B 1) of transparent pieces, a fraction (B2) of non-transparent pieces having an external foreign material layer, said pieces containing metal, a fraction (B3) of non-transparent pieces having an external foreign material layer said pieces not containing metal, a fraction (B4i) of non-transparent pieces having no external foreign material layer, said pieces containing metal, and a fraction (B4ii) of non-transparent pieces having no external foreign material layer, said pieces not containing metal.

In any of the combinations, in particular any of the combinations discussed above, it is further preferred that a sorting by polymer sort takes place either as the first step (i.e. before step b-i) in either of the combinations described above) or as the last step (i.e. following step b-iii)/b-iv) as described above). That said, if the precursor polyolefin recycling stream (A) already predominantly contains only one type of polyolefin, then this sort by polymer type would not be required.

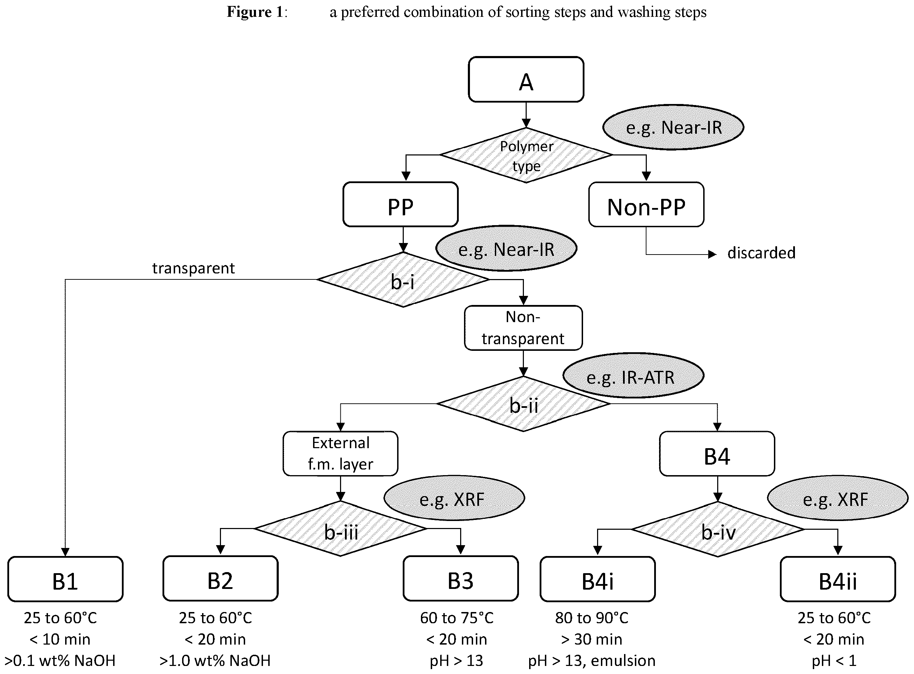

One particular order of sorting steps is reflected in Figure 1, which also provides the washing conditions that may be used for each of these polyolefin recycling fractions (B). In Figure 1, a polymer type sort is also carried out, such that the polyolefin recycling fractions (B) are each polypropylene recycling fractions. The labels B1, B2, B3, B4, B4i, B4ii, b-i, b-ii, b-iii, and b-iv are defined as given above.

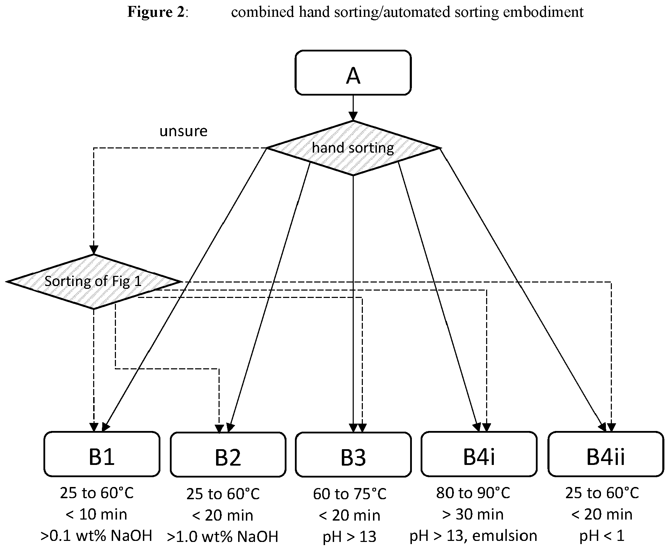

Another alternative is shown in Figure 2, wherein the precursor polyolefin recycling stream (A) is first sorted by hand following a visual inspection, with any pieces identified as belonging to fractions B1, B2, B3, B4i and B4ii assigned directly to the relevant fraction, with any pieces that cannot be straightforwardly assigned to one fraction or another separated into a stream that undergoes sorting steps b-i to b-iv, as in Figure 1. The pieces assigned to each fraction by the hand sorting are combined with the accordant fraction obtained by the sorting of Figure 1 before washing. As would be clear to the person skilled in the art, the embodiment shown in Figure 2 could replace the step of sorting by hand following a visual inspection with a step of sorting via camera systems (operating in the visible range of the EM-spectrum), wherein the camera systems are preferably coupled with AI sorting algorithms. These embodiments have the advantage of improving throughput of the complete sorting step b), since only pieces requiring a more discerning sorting using various optical/spectroscopic sorting steps would be sent to said steps, avoiding a bottleneck at any of these automated sorters.

Although the particular combinations of steps described above are particularly preferred realizations of the present invention, other combinations may be equally or more preferable, depending on the requirements of the target recycled polyolefin.

Depending on the combination of individual sorting steps, different washing conditions would need to be employed.

For example, if the two or more polyolefin recycling fractions (B) obtained in step b) comprises a fraction (B1) of transparent pieces, a fraction (B2) of non-transparent pieces having an external foreign material layer, said pieces containing metal, a fraction (B3) of non-transparent pieces having an external foreign material layer said pieces not containing metal, a fraction (B4) of non-transparent pieces having no external foreign material layer, then fraction (B 1) could be washed using relatively mild conditions, suitable for the removal of odorants or simple organic or inorganic waste (such as shampoo residue or food residue), whilst fraction (B2) could be washed using conditions such as those disclosed in WO 2023/012156 A1, although milder conditions may be employed than were employed in these two applications, since the metal external foreign material layer is likely to be an external foreign material layer (although the presence, for example, of an ink external layer and a metal internal layer cannot be ruled out), fraction (B3) could be washed using conditions such as those disclosed in WO 2021/018605 A1 and WO 2021/104797 A1, fraction (B4), (B4i) and (B4ii) would require more forceful conditions yet, since the pieces present in these fractions will mostly contain multilayer structures (monolayer non-transparent films are possible, due to the presence of pigments/fillers such as carbon black and/or TiO₂; however, these may be separated out at a later stage (see below)).

If the sorting and washing work to peak efficiency, the two or more washed polyolefin recycling fractions (C) should contain only transparent pieces (all metals, inks and other foreign materials having been removed during the washing steps). The resultant fractions may thus be combined for further processing. If the sorting and washing do not quite work to peak efficiency, then there may be differences in the quality of the individual fractions and individual fractions may be combined with fractions having similar purity, with each fraction proceeding for either further purification or processing into a grade of recycled polyolefin.

Since pieces containing pigments/fillers cannot be transformed into transparent pieces by any washing process, the presence of such pieces would reduce the optical properties (in particular the transparency) of the resultant recycled polyolefin grades. It is thus preferred that the two or more washed polyolefin recycling fractions are further sorted to remove any non-transparent pieces. The washed polyolefin recycling fractions may be combined prior to such a post-washing sorting step, or the fractions may be sorted individually, depending on the needs of the user.

As mentioned above, step b) encompasses individual sorting steps that are conducted using optical sorters (such as camera systems linked to AI-analysis or systems based on spectroscopic analysis) and individual sorting steps that use sorters that are not optical sorters (e.g. sorting by hand after visual inspection or the detection of the presence of metals via e.g. eddy current analysis).

It is particularly preferred that at least one of the individual sorters of step b) is an optical sorter. The identity of the at least one optical sorter of step b) is, in the broadest sense, not limited. That said, it is preferred that the optical sorter(s) of step b) sort via a method selected from the group consisting of camera systems (operating in the visible range of the EM-spectrum), visible reflectance spectroscopy, near-IR spectroscopic analysis, mid-IR spectroscopic analysis, high-speed laser spectroscopic analysis, Raman spectroscopic analysis, Fourier-transform infrared (FT-IR) spectroscopic analysis, infrared-attenuated total reflectance (IR-ATR) spectroscopic analysis and X-ray fluorescence (XRF) spectroscopic analysis. Although the sorting by the presence/absence or identity of an external foreign material layer may be carried out by a sorter other than one of the at least one optical sorters, such as hand sorting for example, it is preferred that this step is carried out by an optical sorter, more preferably by infrared-attenuated total reflectance (IR-ATR) spectroscopic analysis and/or camera systems (operating in the visible range of the EM spectrum). Consequently, it is preferred that at least one of the sorters sorts according to infrared-attenuated total reflectance (IR-ATR) spectroscopic analysis and/or camera systems (operating in the visible range of the EM spectrum), whilst the remaining optical sorters of step b) (if further optical sorters are present) sort via a method selected from the group consisting of camera systems (operating in the visible range of the EM-spectrum), visible reflectance spectroscopy, near-IR spectroscopic analysis, mid-IR spectroscopic analysis, high-speed laser spectroscopic analysis, Raman spectroscopic analysis, Fourier-transform infrared (FT-IR) spectroscopic analysis, infrared-attenuated total reflectance (IR-ATR) spectroscopic analysis and X-ray fluorescence (XRF) spectroscopic analysis.

Some of the methods listed above are more effective on pieces having a certain size, with particularly large pieces being difficult to sort.

It is thus preferred that the process of the present invention further comprises a step of shredding the polyolefin-containing pieces to obtain flakes having a flake surface area in the range from 50 to 2500 mm², more preferably in the range from 100 to 1600 mm², most preferably in the range from 150 to 900 mm², wherein this further step may be present either between steps a) and b) or between any of the one or more individual sorting steps that make up step b).

The precise positioning of the shredding step depends on the order of the individual sorting steps of step b), since some sorting steps may be more effective for pieces being in article form, whereas others may be more effective for pieces being in flaked form.

For example, when camera systems (operating in the visible range of the EM spectrum) are coupled with AI sorting algorithms that recognize certain brands of packaging, it is far more straightforward for this packaging recognition to take place on articles, rather than on flakes.

Conversely, many commercial sorters that sort using near-IR spectroscopic analysis are more effective for flake sorting, given the technology used to separate the pieces (e.g. air jets) is designed for use with flakes.

In one particularly preferred embodiment, it is preferred that the further shredding step is present between any of the one or more individual sorting steps that make up step b), in other words at least one of the individual sorting steps that make up step b) is carried out on pieces in article form.

Whilst the different sorting methods may be more or less effective, depending on the size of the pieces, the washing steps are generally more effective on smaller pieces/flakes.

In one embodiment, the sorting by the presence/absence or identity of an external foreign material layer in step b) occurs before the shredding step. This means that this sorting step is carried out on pieces that are objects/articles. Such a sorting step may be carried out by hand sorting, marker recognition, or camera systems (operating in the visible range of the EM-spectrum), wherein the camera systems are preferably coupled with AI sorting algorithms.

In an alternative embodiment, the sorting by the presence/absence or identity of an external foreign material layer in step b) occurs after the shredding step. This means that this sorting step is carried out on pieces that are flakes. Such a sorting step may be carried out by infrared-attenuated total reflectance (IR-ATR) spectroscopic analysis.

As such, it is preferred that the size of the polyolefin-containing pieces in each of the two or more polyolefin recycling fractions (B) is reduced before the washing of step c). This size reduction step may be any suitable size reduction step known in the art, but is preferably achieved via wet milling of each of the two or more polyolefin recycling fractions (B).

### Apparatus

In another aspect, the present invention is directed to a mechanical polyolefin recycling apparatus configured for carrying out the mechanical polyolefin recycling process as described above.

All preferable embodiments and fallback positions of the above-described mechanical pololyefin recycling process are applicable mutatis mutandis to the present mechanical polyolefin recycling apparatus.

### EXAMPLES

The following five polypropylene film samples were obtained by hand sorting from post-consumer mixed plastic waste:
- Sample 1: Surface printed, non-metallised PP film (reel-fed PP-labels)
- Sample 2: Cast PP film with a metal layer as an external layer
- Sample 3: BOPP cast film with a surface printed metal layer as an external layer
- Sample 4: Laminated BOPP cast film with a metal layer between the polymer layers
- Sample 5: Surface printed PP film with a laminated metal layer between the polymer layers

The different films were, prior to washing, cut into approximately square flakes having a flake surface area of approximately 500 mm² .

The washing experiments were performed in a glass beaker where the film flakes were treated with the respective NaOH aqueous wash solution, whilst being stirred at about 250 rpm. In addition to NaOH, the wash solution contained 0.5 wt-% of TUBIWASH GFN, which is a commercial detergent mix available from CHT Germany GmbH. After the main wash, the flakes were rinsed with water at room temperature for about 1 minute.

### Example 1: Washing of surface printed PP films (Sample 1) versus washing a PP films with an external metal layer (Sample 2)

Both Sample 1 and Sample 2 were treated with the NaOH aqueous solution until complete deinking or demetallization was achieved. Whereas complete demetallization was observed within 1 minute for the metallized film (i.e. Sample 2) treated with a 3 wt.-% NaOH aqueous solution at 80 °C, 60 minutes was required to achieve complete deinking of Sample 1 with a 3.0 wt.-% NaOH aqueous solution at 80 °C. Even with a 0.1 wt.-% NaOH aqueous solution at room temperature complete demetallization of Sample 2 was achieved in less than 35 minutes for Sample 2.

**Table 1 Washing results for Sample 1 and Sample 2**

| | Temp. | NaOH | Result |
|---|---|---|---|
| Sample 1 | 80 °C | 3% | Complete deinking takes about 1 hour |
| Sample 2 | RT | 0.1% | Complete demetallization within about 35 min, hydrogen formation |
| | | 3% | Complete demetallization within less than 15 min, hydrogen formation |
| | 80 °C | 0.1% | Complete demetallization within less than 5 min, hydrogen formation |
| | | 3% | Complete demetallization within less than 1 min, hydrogen formation |

As such, a process whereby Sample 1 was sorted from Sample 2 would allow Sample 2 to be washed using milder washing conditions (e.g. RT, 0.1 wt.-% NaOH) or for a shorter amount of time (e.g. 1 minute), rather than subjecting both Sample 1 and 2 (i.e. a mixture of the samples) to the more forceful conditions of 80 °C with 3 wt.-% NaOH for 60 minutes. Such a process (i.e. according to the present invention) is considerably more efficient than conducting a single washing step (i.e. the state of the art).

### Example 2: Washing of a BOPP cast film with a surface printed metal layer as an external layer (Sample 3) versus washing a laminated BOPP cast film with a metal layer between the polymer layers (Sample 4)

Both Sample 3 and Sample 4 were treated with the NaOH aqueous solution until complete deinking and/or demetallization was achieved. Whereas complete demetallization was observed within 1 minute for Sample 3 with the printed metal layer on the polymer surface with a 3 wt.-% NaOH aqueous solution at 80 °C, a significantly longer washing time of 75 minutes was required to achieve complete deinking and delamination in case of Sample 4 under the same washing conditions. Even when applying sonification, deinking and delamination of this sample took about 50 minutes.

**Table 2 Washing results for Sample 3 and Sample 4**

| | Temp. | NaOH | Result |
|---|---|---|---|
| Sample 3 | RT | 0.1% | Demetallization within ~45 min, ink layer can be removed as a film |
| | | 3% | Demetallization within ~20 min, ink layer detaches from the surface as a film (no force required) |
| | 80 °C | 0.1% | Demetallization within less than 1 min, ink needs to be removed by force |
| | | 3% | Complete demetallization & deinking within 1 min (no ink film visible in the wash solution) |
| Sample 4 | 80 °C | 3% | Demetallization and separation of the polymer layers takes about 75 min |
| | | 3% & sonification* | Demetallization and separation of the polymer layers takes about 50 min |

| | | | |
|---|---|---|---|
| * - Ultrasound processor UP400S from Hielscher Ultrasonics GmbH (400 W power, 24 kHz) | | | |

As such, a process whereby Sample 3 was sorted from Sample 4 would allow Sample 3 to be washed using milder washing conditions (e.g. RT, 0.1 wt.-% NaOH), for a shorter amount of time (e.g. 1 minute) or without sonification, rather than subjecting both Sample 3 and 4 (i.e. a mixture of the samples) to the more forceful conditions of 80 °C with 3 wt.-% NaOH for 75 minutes (or 50 minutes with sonification). Such a process (i.e. according to the present invention) is considerably more efficient than conducting a single washing step (i.e. the state of the art).

### Example 3: Surface printed PP film with a laminated metal layer between the polymer layers (Sample 5)

For the washing of Sample 5 an aqueous wash, an acidic wash, and a caustic wash were used, which were applied as an emulsion with heptane as the dispersed phase:
- Neutral wash: an emulsion of water and heptane
- Caustic wash: an emulsion formed of 1.8 wt.-% NaOH aqueous solution and heptane
- Acidic wash: an emulsion formed of concentrated sulphuric acid (i.e. 96 wt.-%) and heptane

Each of the emulsions was formed from 80% v/v aqueous phase and 20% v/v organic phase (i.e. heptane). The washing experiments with the acidic and caustic emulsion were carried out at room temperature and the washing experiment with the neutral emulsion was carried out at both room temperature and 80°C. The flake to emulsion weight ratio was in all washing experiments 30:70.

**Table 2 Washing results for Sample 5**

| | Temp. | Wash solution | Result |
|---|---|---|---|
| Sample 5 | RT | Acidic | Delamination, demetallization, and surface deinking within less than 15 min; hydrogen formation |
| | | Caustic | Delamination, demetallization, and surface deinking within less than 15 min; hydrogen formation |
| | | Neutral | Delamination within less than 10 min; no deinking and delamination; no hydrogen formation. |
| | 80°C | Neutral | Delamination within less than 10 min; no deinking and delamination; no hydrogen formation. |

The data presented in Table 3 demonstrates that different conditions are again required, relative to Samples 3 and 4. Furthermore, there may be more than one option for achieving full delamination/demetallization/deinking, with the acidic and caustic options both performing well.

Example 4: Combined process according to the present invention.

In order to exemplify the benefits of the present invention, a mixture of samples 1 to 5 were either a) subjected to a sorting process into 5 fractions (corresponding to each of samples 1 to 5 individually), with each fraction subjected to different washing conditions, or b) directly washed.

When attempting to wash the mixture directly, most washing conditions were unable to achieve full delamination/demetallization/deinking of all samples, with only very forcing conditions involving emulsions, heating and concentrated acid/base successfully used. On the other hand, when the samples were separated, each fraction was washed appropriately, saving energy, washing solution and time.

## Claims

1. A mechanical polyolefin recycling process, comprising, in the given order, the steps of:
a) providing a precursor polyolefin recycling stream (A) that contains polyolefin-containing pieces, wherein the precursor polyolefin recycling stream (A) contains at least 70 wt.-% of polyolefin-containing films;
b) sorting the pieces of the precursor polyolefin recycling stream (A) in one or more sorting steps by means of one or more sorters to form two or more polyolefin recycling fractions (B), wherein the precursor polyolefin recycling stream (A) is at least sorted by the presence/absence or identity of an external foreign material layer, wherein the foreign material is any non-polyolefin material;
c) washing each of the two or more polyolefin recycling fractions (B) individually, wherein the washing conditions for each of the two or more polyolefin recycling fractions (B) may be the same or different, with the proviso that at least one of the washing conditions is different to at least one other washing condition in least one variable selected from the group consisting of washing temperature, washing duration, washing solution, thereby generating two or more washed polyolefin recycling fractions (C).

2. The mechanical polyolefin recycling process according to claim 1, wherein at least one of the one or more sorters of step b) is an optical sorter that sorts via a method selected from the group consisting of camera systems (operating in the visible range of the EM-spectrum), visible reflectance spectroscopy, near-IR spectroscopic analysis, mid-IR spectroscopic analysis, high-speed laser spectroscopic analysis, Raman spectroscopic analysis, Fourier-transform infrared (FT-IR) spectroscopic analysis, infrared-attenuated total reflectance (IR-ATR) spectroscopic analysis and X-ray fluorescence (XRF) spectroscopic analysis.

3. The mechanical polyolefin recycling process according to either claim 1 or claim 2, wherein, in step b), the pieces of the precursor polyolefin recycling stream (A) are additionally sorted by the presence/absence of metal.

4. The mechanical polyolefin recycling process according to any one of the preceding claims, wherein, in step b), the pieces of the precursor polyolefin recycling stream (A) are additionally sorted by colour, preferably between transparent and non-transparent pieces.

5. The mechanical polyolefin recycling process according to any one of the preceding claims, wherein, in step b), the pieces of the precursor polyolefin recycling stream (A) are additionally sorted by polyolefin type.

6. The mechanical polyolefin recycling process according to any one of the preceding claims, wherein, step b) comprises at least the following individual sorting steps in the given order
b-i) sorting between transparent and non-transparent pieces,
b-ii) sorting the non-transparent pieces between non-transparent pieces having an external foreign material layer and non-transparent pieces having no external foreign material layer, and
b-iii) sorting the non-transparent pieces having an external foreign material layer between non-transparent pieces having an external foreign material layer, said pieces containing metal and non-transparent pieces having an external foreign material layer, said pieces not containing metal,
wherein the pieces of the precursor polyolefin recycling stream (A) are additionally sorted by polyolefin type before step b-i), unless the precursor polyolefin recycling stream (A) predominantly contains only pieces containing predominantly one type of polyolefin.

7. The mechanical polyolefin recycling process according to claim any one of the preceding claims, further comprising a step of shredding the polyolefin-containing pieces to obtain flakes having a flake surface area in the range from 50 to 2500 mm², wherein this further step may be present either between steps a) and b) or between any of the one or more individual sorting steps that make up step b).

8. The mechanical polyolefin recycling process according to claim 7, wherein the further step of shredding is present between individual sorting steps that make up step b) and at least one of the sorting steps of step b) that preceded this further step of shredding is carried out using one or more sorters selected from the group consisting of sorting by hand following a visual inspection and camera systems (operating in the visible range of the EM-spectrum) wherein the camera systems are coupled with simple recognition algorithms or AI sorting algorithms.

9. The mechanical polyolefin recycling process according to any one of the preceding claims, wherein the size of the polyolefin-containing pieces in each of the two or more polyolefin recycling fractions (B) is reduced, preferably via wet milling, before the washing of step c).

10. The mechanical polyolefin recycling process according to any one of the preceding claims, wherein the two or more polyolefin recycling fractions (B) obtained in step b) comprises a fraction (B1) of transparent pieces, a fraction (B2) of non-transparent pieces having an external foreign material layer, said pieces containing metal, a fraction (B3) of non-transparent pieces having an external foreign material layer said pieces not containing metal, a fraction (B4) of non-transparent pieces having no external foreign material layer.

11. The mechanical polyolefin recycling process according to any one of claims 1 to 9, wherein the two or more polyolefin recycling fractions (B) obtained in step b) comprises a fraction (B1) of transparent pieces, a fraction (B2) of non-transparent pieces having an external foreign material layer, said pieces containing metal, a fraction (B3) of non-transparent pieces having an external foreign material layer said pieces not containing metal, a fraction (B4i) of non-transparent pieces having no external foreign material layer, said pieces containing metal, and a fraction (B4ii) of non-transparent pieces having no external foreign material layer, said pieces not containing metal.

12. The mechanical polyolefin recycling process according to any one of the preceding claims, wherein each of the two or more polyolefin recycling fractions (B) contains at least 70 wt.-%, more preferably at least 80 wt.-%, yet more preferably at least 90 wt.-% of a single polyolefin type, preferably selected from polyethylene and polypropylene.

13. The mechanical polyolefin recycling process according to any one of the preceding claims, wherein each of the washing conditions in step c) differs from each of the other washing conditions in at least one variable selected from the group consisting of washing temperature, washing duration, and washing solution.

14. The mechanical polyolefin recycling process according to any one of the preceding claims, wherein the precursor polyolefin recycling stream (A) originates from post-consumer waste, post-industrial waste, or a combination thereof, preferably from post-consumer waste.

15. A mechanical polyolefin recycling apparatus configured for carrying out the mechanical polyolefin recycling process according to any one of the preceding claims.
